# EUROPEAN PATENT APPLICATION

(11) **EP 4 495 040 A1**
(43) Date of publication of application: **22.01.2025**
(21) Application number: 24764129.3
(22) Date of filing: 21.02.2024
(51) Int. Cl.: B66B 5/00, B66B 1/34, G06Q 50/10, G06F 3/048

(54) **MAINTENANCE MANAGEMENT SYSTEM OF PASSENGER TRANSFER DEVICE**

(30) Priority: 27.02.2023 KR 20230026043; 27.02.2023 KR 20230026044; 02.11.2023 KR 20230150050; 02.11.2023 KR 20230150051
(71) Applicant: Hyundai Elevator Co., Ltd., Chungju-si, Chungcheongbuk-do 27329 (KR)
(72) Inventor: YOUN, Suk Jun, Chungju-si, Chungcheongbuk-do 27329 (KR); LEE, Hong Chang, Chungju-si, Chungcheongbuk-do 27329 (KR); HAN, Eugene, Chungju-si, Chungcheongbuk-do 27329 (KR)
(74) Representative: Baldus, Oliver
(86) International application number: PCT/KR2024/002276
(87) International publication number: WO 2024/181729

(57) **Abstract**

The present invention relates to a maintenance management system of a passenger transfer device, the system comprising: a fault diagnostic server that collects error code information and operational state information of the passenger transfer device from a passenger transfer device control panel and stores same, and diagnoses a fault cause on the basis of the collected error code information; and a repair terminal that accesses the fault diagnostic server to receive and display the error code information, the result of diagnosing the fault cause, and the operational state information of the passenger transfer device, which are stored in the fault diagnostic server, wherein the repair terminal comprises a first output screen that displays the error code information and the fault diagnosis result, and a second output screen that converts operational state information of the passenger transfer device at the time point of occurrence of the error code into a graph to display visualized information.

## Description

### [Technical Field]

The present invention relates to a maintenance management system of a passenger transfer device.

### [Background Art]

In various high-rise buildings for residential and business purposes, elevators are installed to facilitate vertical movement of passengers visiting such buildings.

An elevator includes an elevator car that moves passengers while moving up and down along a hoistway formed in a building in a vertical direction, a mechanical part provided with a motor and a winding machine to produce a predetermined power to move the elevator car to a corresponding floor in response to a button operation of a passenger, and an elevator controller that controls the mechanical part in response to the button operation of the passenger such that the elevator car can be smoothly and stably operated.

Such an elevator inevitably undergoes failure during use and, when failure occurs in the elevator, rapid repair of the elevator is a very important issue in terms of elevator maintenance management.

In general, when an elevator issues a failure report, a maintenance worker is dispatched to check and analyze an error code to determine a cause of the failure by connecting a serial cable to a control panel in a machine room and carries out maintenance work.

In this case, since the error code can be checked and analyzed only after the maintenance worker arrives at a corresponding site, it is difficult to determine the failure cause in advance.

In addition, it is difficult to prepare necessary components or equipment according to the failure cause in the course of dispatching to a corresponding site. Thus, it is necessary to prepare additional components or equipment for maintenance work after on-site inspection, causing problems with a cumbersome maintenance work procedure and increase in time for the maintenance work.

Moreover, in the event of elevator failure, a significantly large number of error codes is generated in a short period of time, thereby making it difficult for a maintenance worker to determine an exact failure cause based on the error codes. In particular, for inexperienced maintenance workers, it is very difficult to find a main failure cause based on multiple error codes.

Moreover, the maintenance worker may check an error code and an operation state of the elevator at an occurrence time of the error code and determine a failure cause based thereon. However, since data for the error code and the operation state of the elevator provided to the maintenance worker is displayed in the form of simple text, it is difficult for the maintenance worker to accurately identify the error code and operation state data due to very low readability thereof and to compare the displayed error code with other error codes, thereby making it very difficult to determine the failure cause.

(Prior art Reference) Korean Patent Registration No. 10-1775529

### [Disclosure]

### [Technical Problem]

It is one aspect of the present invention to provide a maintenance management system of a passenger transfer device, which allows maintenance workers to more intuitively identify a failure state based on visualized data.

It is another aspect of the present invention to provide a maintenance management system of a passenger transfer device, which can separately compare and analyze operation state data of the passenger transfer device for error codes selected by a maintenance worker.

### [Technical Solution]

In accordance with one aspect of the present invention, there is provided a maintenance management system of a passenger transfer device, including: a failure diagnosis server configured to collect and store error code data and operation state data of the passenger transfer device from a control panel of the passenger transfer device and configured to diagnose a failure cause based on the collected error code data; and a maintenance terminal configured to access the failure diagnosis server to receive and display the error code data, a failure diagnosis result for the failure cause, and the operation state data of the passenger transfer device sent from the failure diagnosis server, wherein the maintenance terminal includes: a first output screen configured to display the error code data and the failure diagnosis result; and a second output screen configured to display the operation state data of the passenger transfer device at an occurrence time of the error code in a graphical form of visualized data.

The failure diagnosis server may include: a first communication unit configured to receive the error code data and the operation state data of the passenger transfer device recorded in the control panel of the passenger transfer device in real time; an error code storage unit configured to arrange the error code data received through the first communication unit in a time sequence and configured to classify and store the error code data into one time-series data group at every preset reference time interval; a diagnosis unit configured to analyze the error code data for each time-series data group stored in the error code storage unit and configured to diagnose a failure cause for the time-series data group; a visualization processing unit configured to produce visualized data in a graphical form by graphing the operation state data of the passenger transfer device corresponding to the error code at an occurrence time of the error code; and a second communication unit configured to receive a data request signal from the maintenance terminal and to send the error code data stored in the error code storage unit, the failure diagnosis result diagnosed by the diagnosis unit, and the visualized data produced by the visualization processing unit to the maintenance terminal, and may be configured to send the error code data, the failure diagnosis result and the visualized data to the maintenance terminal upon receiving the data request signal from the maintenance terminal.

The maintenance terminal may include: an input unit for input operation of a maintenance worker; a display unit including a first output screen and a second output screen to display the error code data, the failure diagnosis result, and the visualized data sent from the failure diagnosis server; a terminal communication unit configured to receive the error code data, the failure diagnosis result, and the visualized data from the failure diagnosis server through communication with the second communication unit; and a controller configured to send a data request signal to the failure diagnosis server through the terminal communication unit upon generation of an input signal by the maintenance worker and configured to control the display unit to display at least one of the error code data, the failure diagnosis result, and the visualized data received from the failure diagnosis server corresponding to transmission of the data request signal.

The first output screen may include an error code display region in which the error code data is displayed in a classified state for each time-series data group; and a diagnosis result display region in which a failure diagnosis result for the error code data is displayed for each time-series data group.

The error code display region may include individual regions configured to display each error code datum separately, wherein each of the individual regions is formed with a menu button including a second output screen switching menu selected for switching of an output screen of the maintenance terminal to the second output screen.

The second output screen may include: a speed display region configured to display a speed change state of the passenger transfer device in a graphical form; and a door display region configured to display an operation state of a door of the passenger transfer device detected at an occurrence time of the error code, wherein the door display region is displayed at a location corresponding to an occurrence time of the error code in the speed display region.

The failure diagnosis server may further include: an IO analysis unit configured to analyze IO data about an operation state of the passenger transfer device corresponding to each error code at an occurrence time of the corresponding error code and to produce tabulated IO data interpretations about the operation state of the passenger transfer device, and the display unit of the maintenance terminal may further include a third output screen configured to display the tabulated IO data interpretations produced by the IO analysis unit.

The display unit of the maintenance terminal may further include an error code data display screen configured to display state data for each of the error code data displayed on the first output screen and may be controlled by the controller to allow the error code data display screen to be displayed so as to overlap the first output screen upon generation of a selection input signal by which any of the error code data displayed on the first output screen is selected.

In accordance with another aspect of the present invention, there is provided a method of controlling a maintenance management system of a passenger transfer device, the maintenance management system including a failure diagnosis server and a maintenance terminal, the method including: collecting and storing, by the failure diagnosis server, error code data and operation state data of the passenger transfer device from a control panel of the passenger transfer device; diagnosing, by the failure diagnosis server, a failure cause based on the collected error code data; producing, by the failure diagnosis server, visualized data in a graphical form using the operation state data of the passenger transfer device at an occurrence time of the error code; and receiving and displaying, by the maintenance terminal, the error code data, a failure diagnosis result, and the visualized data from the failure diagnosis server, wherein the maintenance terminal displays the error code data and the failure diagnosis result on a first output screen, and displays visualized data for an operation state of the passenger transfer device at an occurrence time of the error code on a second output screen.

In accordance with a further aspect of the present invention, there is provided a maintenance management system of a passenger transfer device, including: a failure diagnosis server configured to collect and store error code data and operation state data of the passenger transfer device from a control panel of the passenger transfer device, and configured to diagnose a failure cause based on the collected error code data; and a maintenance terminal configured to access the failure diagnosis server to receive and display the error code data, a failure diagnosis result for the failure cause, and the operation state data of the passenger transfer device sent from the failure diagnosis server, wherein the maintenance terminal includes a first output screen configured to display the error code data and the failure diagnosis result, and a selection comparison output screen configured to output operation state data of the passenger transfer device collected at an occurrence time of each of error codes selected by a maintenance worker on the first output screen through comparison with the selected error codes.

The selection comparison output screen may include: an interpretation comparison output screen configured to display each of tabulated IO data interpretations for an operation state of the passenger transfer device at an occurrence time of each of the selected error codes; and a visualized data comparison output screen configured to display predetermined data about the operation state of the passenger transfer device at the occurrence time of each of the selected error codes in a graphical form of visualized data comparable with each other, and the interpretation comparison output screen and the visualized data comparison output screen may be switched to each other by manipulation of the maintenance worker.

The first output screen may be formed with a selection mode conversion button configured to allow conversion to a selection screen mode in which the error code data displayed on the first output screen can be selected by the maintenance worker, and a comparison screen switching button configured to allow screen switching to the selection comparison output screen.

The failure diagnosis server includes: a first communication unit configured to receive the error code data and the operation state data of the passenger transfer device recorded in the control panel of the passenger transfer device in real time; an error code storage unit configured to arrange the error code data received through the first communication unit in a time sequence and configured to classify and store the error code data into one time-series data group at every preset reference time interval; a diagnosis unit configured to analyze the corresponding error code data for each time-series data group stored in the error code storage unit and configured to diagnose a failure cause for the time-series data group; an IO analysis unit configured to analyze IO data for an operation state of the passenger transfer device corresponding to each error code selected on the maintenance terminal at an occurrence time of the corresponding error code to produce tabulated IO data interpretations about the operation state of the passenger transfer device; a comparison visualization processing unit configured to produce predetermined basic data about the operation state of the passenger transfer device corresponding to each error code selected on the maintenance terminal at an occurrence time of the corresponding error code in a graphical form of visualized data comparable with each other; and a second communication unit configured to receive a data request signal from the maintenance terminal and to send the error code data, a failure diagnosis result, IO data interpretations, and the visualized data to the maintenance terminal, and may be configured to send the error code data, the failure diagnosis result, the IO data interpretations, and the visualized data to the maintenance terminal upon receiving the data request signal from the maintenance terminal.

The maintenance terminal may include: an input unit for input operation of a maintenance worker; a display unit including a first output screen and a selection comparison output screen to display the error code data, the failure diagnosis result, the IO data interpretations, and the visualized data sent from the failure diagnosis server; a terminal communication unit configured to receive the error code data, the failure diagnosis result, the IO data interpretations, and the visualized data from the failure diagnosis server through communication with the second communication unit; and a controller configured to send a data request signal to the failure diagnosis server through the terminal communication unit upon generation of an input signal by the maintenance worker and configured to display at least one of the error code data, the failure diagnosis result, the IO data interpretations, and the visualized data received from the failure diagnosis server on the display unit corresponding to transmission of the data request signal.

In accordance with yet another aspect of the present invention, there is provided a method of controlling a maintenance management system of a passenger transfer device, the maintenance management system including a failure diagnosis server and a maintenance terminal, the method including: collecting and storing, by the failure diagnosis server, error code data of the passenger transfer device and operation state data of the passenger transfer device from a control panel of the passenger transfer device; diagnosing, by the failure diagnosis server, a failure cause based on the collected error code data; producing, by the failure diagnosis server, a comparison result through comparison of some error code data with the operation state data of the passenger transfer device collected at an occurrence time of each error code; and receiving and displaying, by the maintenance terminal, the error code data, a failure diagnosis result, and comparison result data from the failure diagnosis server, wherein the maintenance terminal is configured to allow a maintenance worker to select some error code data among the error code data displayed on the maintenance terminal, and the step of producing the comparison result includes comparing the operation state data of the passenger transfer device collected at an occurrence time of each error code with some error code data selected on the maintenance terminal to produce the comparison result.

### [Advantageous Effects]

According to the present invention, the maintenance management system can display various visualized data for error code data, operation state data of a passenger transfer device corresponding to the error code data, and IO data interpretations on a maintenance terminal to provide a maintenance worker with a more intuitive understanding of a failure state.

In addition, the maintenance management system can improve accuracy and speed of failure diagnosis through the visualized data displayed on the maintenance terminal.

Further, according to the present invention, the maintenance management system can separately analyze the operation state data of the passenger transfer device through comparison with multiple error code data selected on the maintenance terminal by a maintenance worker by providing comparative data about the operation state data of the passenger transfer device at an occurrence time of each error code.

Furthermore, since the operation state data of the passenger transfer device for separately selected error codes can be comparatively analyzed, it is possible to improve the overall failure diagnosis accuracy and failure treatment speed for the passenger transfer device.

### [Description of Drawings]

FIG. 1 is a conceptual block diagram of an overall configuration of an elevator maintenance management system according to one embodiment of the present invention.
FIG. 2 is a conceptual block diagram of an overall configuration of an elevator maintenance management system according to another embodiment of the present invention.
FIG. 3 is a block diagram of a failure diagnosis server and a maintenance terminal of the elevator maintenance management system according to the embodiment of the present invention.
FIG. 4 and FIG. 5 are exemplary views illustrating a method of accessing a failure diagnosis server by the maintenance terminal and a method of displaying a failure diagnosis result in the elevator maintenance management system according to the embodiment of the present invention.
FIG. 6 is an exemplary view illustrating error code data displayed on the maintenance terminal according to the embodiment of the present invention.
FIG. 7 is an exemplary view illustrating a method of displaying failure diagnosis results in the maintenance terminal according to the embodiment of the present invention.
FIG. 8 is an enlarged view of a first output screen configured to display error code data and failure diagnosis results for one time-series data group on the maintenance terminal according to the embodiment of the present invention.
FIG. 9 is an exemplary view of an error code data display screen of the maintenance terminal for individual error code data in the elevator maintenance management system according to the embodiment of the present invention.
FIG. 10 is an exemplary view of an activated state of a menu button for error code data on the first output screen of the maintenance terminal according to the embodiment of the present invention.
FIG. 11 is an exemplary view of a second output screen of the maintenance terminal according to the embodiment of the present invention.
FIG. 12 is an exemplary view of a third output screen of the maintenance terminal according to the embodiment of the present invention.
FIG. 13 is an exemplary view of a fourth output screen of the maintenance terminal according to the embodiment of the present invention.
FIG. 14 is a block diagram of a failure diagnosis server and a maintenance terminal of an elevator maintenance management system according to one embodiment of the present invention.
FIG. 15 is an exemplary view of a selection comparison output screen configured to compare user-selected error code data in the elevator maintenance management system according to the embodiment of the present invention.

### [Best Mode]

Hereinafter, exemplary embodiments of the present invention will be described in detail with reference to the accompanying drawings. Like components will be denoted by like reference numerals throughout the drawings. In addition, detailed descriptions of known functions and constructions which may unnecessarily obscure the subject matter of the invention will be omitted.

First, a passenger transfer device according to the present invention includes an elevator, an escalator, and a moving walkway. The following description will refer to elevators.

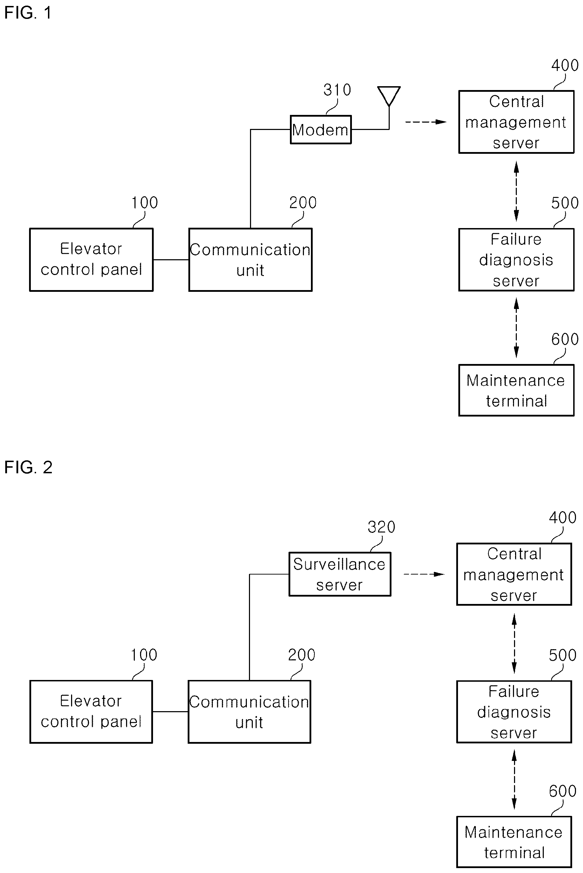

FIG. 1 is a conceptual block diagram of an overall configuration of an elevator maintenance management system according to one embodiment of the present invention and FIG. 2 is a conceptual block diagram of an overall configuration of an elevator maintenance management system according to another embodiment of the present invention.

An elevator maintenance management system according to one embodiment of the present invention includes a failure diagnosis server 500 configured to collect error code data from an elevator control panel 100 to diagnose a failure cause, and a maintenance terminal 600 configured to access the failure diagnosis server 500 to receive and display the error code data and a failure diagnosis result.

First, for the overall system configuration, the elevator may include a control panel 100 configured to control an operation state of the elevator. The control panel 100 may receive signals about operation state data of the elevator. The control panel may receive various failure occurrence signals. The operation state data and failure occurrence signals of the elevator may be generated by a plurality of sensors in the elevator. The control panel 100 may be configured to receive the operation state data and the failure occurrence signals of the elevator through the sensors. The control panel 100 may be configured to receive and store the operation state data and the failure occurrence signals of the elevator. In response to a failure occurrence signal, the control panel 100 may generate an error code that matches the failure occurrence signal.

The operation state signals and the error code data may be sent in real time to a central management server 400 through a communication unit 200. As shown in FIG. 1, the communication unit 200 may be configured to communicate with the central management server 400 through a modem 310 thereof to send the operation state signals and the error code data. When a separate surveillance system is present, as shown in FIG. 2, the communication unit 200 may communicate with the central management server 400 through a surveillance server 320 and send corresponding data.

The central management server 400 may be configured to send the received data to a separate failure diagnosis server 500. The failure diagnosis server 500 may be configured to receive the operation state signals and the error code data. The failure diagnosis server 500 may be implemented as a cloud server and may be connected to the maintenance terminal 600 via an internet protocol network. The operation state data of the elevator and the error code data received by the failure diagnosis server 500 may be sent to the maintenance terminal 600. In the maintenance terminal 600, a user may access the failure diagnosis server 500 through an application program to receive the operation state data of the elevator and the error code data. In addition, the failure diagnosis server 500 may be configured to analyze the received error code data to analyze a failure cause. The failure diagnosis server 500 may be configured to derive a diagnosis result of the failure cause. The derived diagnosis result may be provided to the maintenance terminal 600 through the application program of the maintenance terminal 600.

When a failure signal is generated from the elevator or a failure report is received, a maintenance worker may be selected according to the maintenance management system. Basic data for the elevator may be provided to the selected maintenance worker. The basic data for the elevator provided to the maintenance worker may include circumstances of the failure report or basic specifications of the elevator.

In the elevator maintenance management system according to the embodiment, error codes and a failure diagnosis result may be sent to the maintenance terminal through the failure diagnosis server 500. The maintenance worker can prepare necessary components or equipment before dispatching. As a result, a failure treatment time can be reduced and failure treatment work can be more easily performed.

In the following, details of the elevator maintenance management system according to the embodiment of the present invention will be described in more detail.

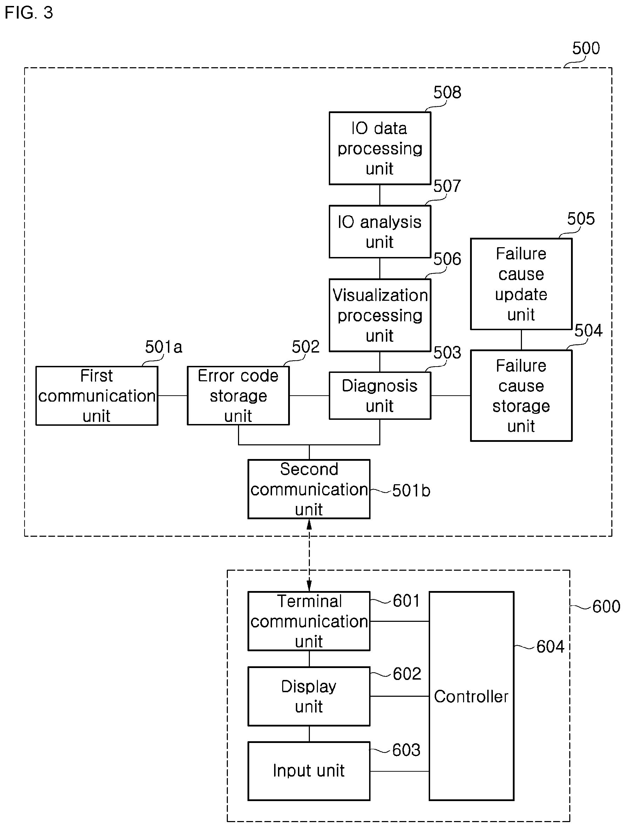

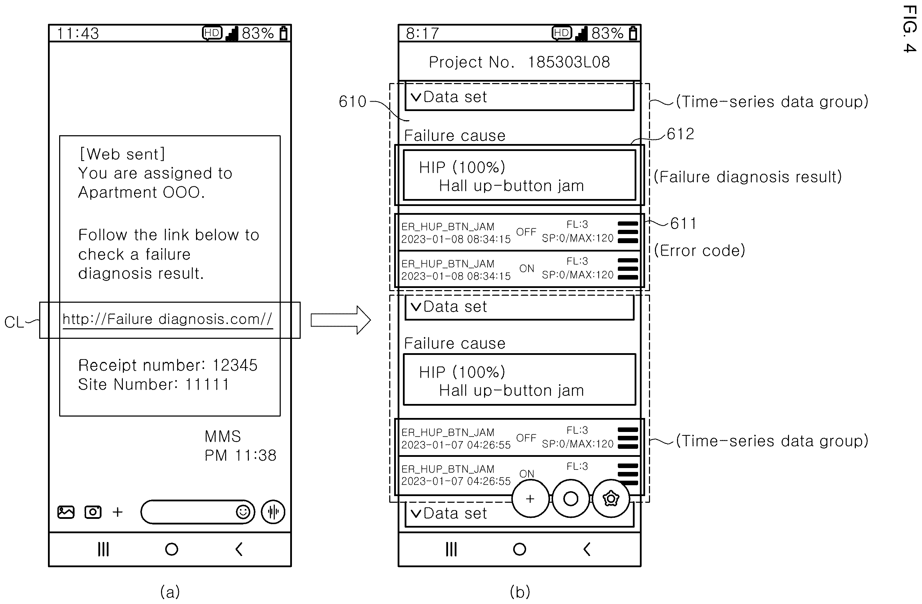

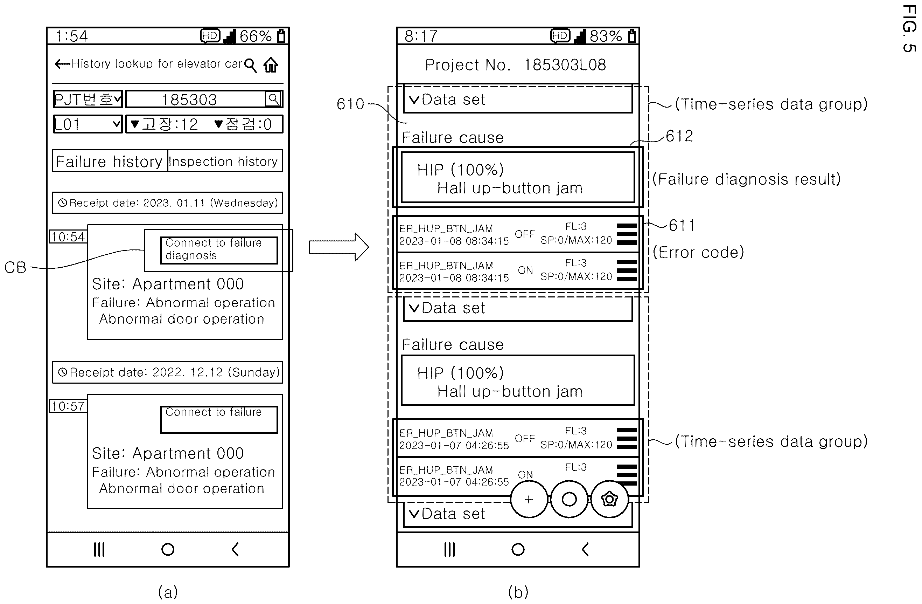

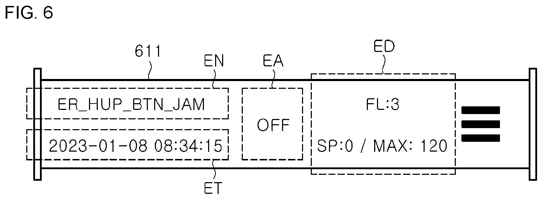

FIG. 3 is a block diagram of the failure diagnosis server and the maintenance terminal of the elevator maintenance management system according to the embodiment of the present invention, FIG. 4 and FIG. 5 are exemplary views illustrating a method of accessing the failure diagnosis server by the maintenance terminal and a method of displaying a failure diagnosis result in the elevator maintenance management system according to the embodiment of the present invention, and FIG. 6 is an exemplary view illustrating the form of error code data displayed on the maintenance terminal according to the embodiment of the present invention.

The elevator maintenance management system according to the embodiment of the present invention may include the failure diagnosis server 500 and the maintenance terminal 600, as described above.

The failure diagnosis server 500 may be configured to collect and store error code data of the elevator from the elevator control panel 100 and may be configured to diagnose a failure cause based on the collected error code data. The maintenance terminal 600 may be configured to access the failure diagnosis server 500 to receive and display the error code data and a diagnosis result for the failure sent from the failure diagnosis server 500.

The failure diagnosis server 500 may include a first communication unit 501a, an error code storage unit 502, a diagnosis unit 503, and a second communication unit 501b. The failure diagnosis server 500 may further include a visualization processing unit 506, an IO analysis unit 507, and an IO data processing unit 508, as shown in FIG. 3, which will be described below.

The first communication unit 501a is configured to receive the error code data recorded in the elevator control panel 100 in real time. As described above, the error code data recorded in the elevator control panel 100 is sent to the central management server 400 and the first communication unit 501a may be configured to receive the error code data from the central management server 400 through communication with the central management server 400. In addition, the first communication unit 501a may be configured to receive the operation state data of the elevator in addition to the error code data recorded in the elevator control panel 100. For example, the first communication unit 501a may be configured to receive general operation state data of the elevator, such as a speed of the elevator, a floor number, a door operation state, and detection signals of various sensors. In particular, the first communication unit 501a may be configured to receive various data, such as data for change in operation state of the elevator upon generation of an error code.

The error code storage unit 502 may be configured to store the error code data, the operation state data of the elevator and the like received through the first communication unit 501a. The diagnosis unit 503 may be configured to analyze the error code data stored in the error code storage unit 502 to diagnose a failure cause. The diagnosis unit 503 may be configured to diagnose the failure cause in response to a data request signal received from the maintenance terminal 600.

The second communication unit 501b may be configured to receive the data request signal from the maintenance terminal 600 through communication with the maintenance terminal 600. The second communication unit 501b may be configured to send the error code data stored in the error code storage unit 502 and a failure diagnosis result derived by the diagnosis unit 503 to the maintenance terminal 600. The second communication unit 501b may also be configured to send various other data, such as the operation state data of the elevator stored in the error code storage unit 502, to the maintenance terminal 600.

The failure diagnosis server 500 may be configured to collect the error codes recorded in the elevator control panel 100 and the operation state data of the elevator through the first communication unit 501a and to store the error codes and the operation state data of the elevator in the error code storage unit 502. When the failure diagnosis server 500 receives a data request signal from the maintenance terminal 600, the failure diagnosis server 500 may diagnose a failure cause for the corresponding error code through the diagnosis unit 503. Further, the failure diagnosis server 500 may be configured to send the error code data, the failure diagnosis result, and the operation state data of the elevator to the maintenance terminal 600.

The maintenance terminal 600 may refer to a wirelessly communicable terminal carried by maintenance workers. The maintenance terminal 600 may include an input unit 603, a display unit 602, a terminal communication unit 601, and a controller 604.

The input unit 603 may be formed on the maintenance terminal 600 for input operation by maintenance workers. The input unit 603 may be formed on the maintenance terminal 600 by touch operation through a touch panel or may be formed in various forms, such as separate physical buttons and the like.

The display unit 602 may be configured to display the error code data sent from the failure diagnosis server 500, a failure diagnosis result, and the operation state data of the elevator, and the like. The display unit 602 may be formed as a display screen formed on the maintenance terminal 600.

The terminal communication unit 601 may be configured to send data request signals and the like to the failure diagnosis server 500 or to receive the error code data, the failure diagnosis result, the operation state data of the elevator, and the like from the failure diagnosis server 500 through communication with the second communication unit 501b of the failure diagnosis server 500.

The controller 604 may be configured to control the input unit 603, the display unit 602, and the terminal communication unit 601 of the maintenance terminal 600. When a maintenance worker generates an input signal through the input unit 603, the controller 604 may send a data request signal corresponding to the input signal to the failure diagnosis server 500 through the terminal communication unit 601. In response to the data request signal, the failure diagnosis server 500 may send the error code data, the failure diagnosis result, and the operation state data of the elevator to the controller 604 through the terminal communication unit 601. The controller 604 may control the display unit to display the error code data, the failure diagnosis result, and the operation state data of the elevator received from the failure diagnosis server 500 on the display unit 602.

In response to a failure signal from the elevator, a maintenance worker may be selected and basic data for the elevator may be provided to the selected maintenance worker through the maintenance terminal 600. In one embodiment, error code data and a failure diagnosis result may be further sent to the maintenance terminal 600 through the failure diagnosis server 500.

Here, in one embodiment, a confirmation request notification message may be sent to the maintenance terminal 600 of the maintenance worker to request to confirm the failure diagnosis result, as shown in FIG. 4. The confirmation request notification message may include a web link address CL of the failure diagnosis server where the failure diagnosis result can be confirmed. The confirmation request notification message may be sent via SMS to a mobile phone of the maintenance worker or to the maintenance terminal, as shown in FIG. 4.

An access input signal to the web link address CL may be generated by the maintenance worker touching the web link address CL included in an SMS type confirmation request notification message. In response to the access input signal, the controller 604 may be configured to send a data request signal corresponding to the web link address CL to the failure diagnosis server 500. The controller 604 may control the display unit 602 to display the error code data and the failure diagnosis result received from the failure diagnosis server 500 corresponding to transmission of the data request signal.

In other words, by touching the web link address CL of the confirmation request notification message sent to the maintenance terminal 600, the maintenance worker can access the failure diagnosis server 500 to check the error code and the failure diagnosis result.

On the other hand, as shown in FIG. 5, the maintenance worker may access the failure diagnosis server through a separate maintenance management program installed in the maintenance terminal. For example, a connection button CB may be formed in the maintenance management program of the maintenance terminal. By touching the connection button CB, the maintenance worker may generate an access input signal with respect to the failure diagnosis server 500. The controller 604 may send a data request signal corresponding to the connection button CB to the failure diagnosis server 500 in response to the access input signal and control the display unit 602 to display the error code data and the failure diagnosis result received from the failure diagnosis server 500 corresponding to transmission of the data request signal.

In other words, the elevator maintenance management system may be configured to allow the maintenance worker to access the failure diagnosis server 500 to check the error codes, the failure diagnosis results, and the like by touching the connection button CB formed in the maintenance management program of the maintenance terminal 600. In this case, a connection button CB may be formed in the form of a button labeled with a phrase, such as "Connect to failure diagnosis," as shown in FIG. 5.

In the maintenance management program, when the maintenance worker wants to check failure data, such as past failure data of the elevator for reference while checking past failure treatment results, the maintenance worker can check the past failure data and the failure diagnosis results through the connection button CB. That is, in the maintenance management program, the maintenance worker can check the failure data and the failure diagnosis results of the elevator at any time by touching the connection button CB. As a result, it is possible to improve accuracy of maintenance work and such data and diagnosis results can be utilized as reference data for maintenance work even by non-experts.

To summarize, at an occurrence time of a failure in an elevator, basic data for the elevator may be sent together with confirmation request notification for an error code and a failure diagnosis result of the elevator to the maintenance terminal of the selected maintenance worker. This can be carried out in the form of a text message. When an access input signal is generated through the link address CL included in the text message or the connection button CB of the maintenance management program, a data request signal may be sent to the failure diagnosis server 500, and the maintenance terminal 600 may receive the error code and the failure diagnosis result from the failure diagnosis server 500 and may display the error code and the failure diagnosis result on the display unit 602.

Accordingly, since the maintenance worker can check the error code and the failure diagnosis result of the corresponding elevator before dispatching to a failure site, the maintenance worker can prepare necessary components and equipment in advance.

On the other hand, the error code storage unit 502 of the failure diagnosis server 500 may be configured to arrange and store the error code data received through the first communication unit 501a in a time sequence. The error code storage unit 502 may be configured to store the error code data by classifying the error code data into one time-series data group at every preset reference time interval. The diagnosis unit 503 may be configured to analyze the corresponding error code data for each time-series data group stored in the error code storage unit 502 to diagnose a failure cause for the time-series data group.

In addition, the display unit 602 of the maintenance terminal 600 may include a first output screen 610 having an error code display region 611 in which error code data is displayed, and a diagnosis result display region 612 in which failure diagnosis results are displayed, as shown in FIG. 4 and FIG. 5. In the error code display region 611, at least one error code may be displayed in a time sequence for each time-series data group classified in the failure diagnosis server 500. That is, one time-series data group is displayed in one error code display region 611. Here, one diagnosis result display region 612 may be formed corresponding to one error code display region 611 such that a failure diagnosis result can be displayed for each time-series data group.

Further, as shown in FIG. 6, the error code data displayed in the error code display region 611 includes an error code name (EN), an error code occurrence time (ET), and elevator operation state data (ED) at an occurrence time of the error code. In addition, activation data (EA) for the corresponding error code may also be displayed.

For example, the error code name (EN) may be displayed as "ER_HUP_BTN JAM" to indicate the type of error code and the error code occurrence time (ET) may be displayed in a region under the error code name. Further, the elevator operation state data ED generated at an occurrence time of the error code may include the number of floors, the current speed/maximum speed (in FIG. 6, 3 floors, current speed 0/maximum speed 120), and the like. Further, the activation data (EA) of the error code indicates whether the error code is currently activated or deactivated, and when the activation data is displayed as "OFF" as shown in FIG. 6, it can be understood that the error code is currently deactivated.

According to this structure, when a maintenance worker accesses the failure diagnosis server 500 through the maintenance terminal 600, the maintenance terminal 600 displays error code data and failure diagnosis data for the corresponding elevator on the screen. Here, since the error code data includes the error code name, the occurrence time, and the elevator operation state data, the maintenance worker can check the basic operation state data of the elevator in addition to the failure diagnosis result provided from the failure diagnosis server 500, and can also infer a failure diagnosis result through the related error code data.

That is, in the embodiment of the invention, by accessing the failure diagnosis server 500 through the maintenance terminal 600, the maintenance worker can check all error codes generated in the corresponding elevator, and thus can predict and determine an on-site situation before dispatching to the failure site.

As such, by receiving the error code and the operation state data of the elevator in addition to the failure diagnosis result through the maintenance terminal 600, a skilled maintenance worker can determine a failure cause that is different from the failure diagnosis result provided by the failure diagnosis server 500, thereby achieving more accurate anticipation and on-site response. In addition, an unskilled maintenance worker can use the failure diagnosis result provided by the failure diagnosis server 500 as a reference to facilitate on-site response.

In addition, a large number of error codes is generated in a period of time before and after the occurrence of a failure and the failure diagnosis server 500 may receive error code data detected by the control panel 100 of the elevator in real time. The failure diagnosis server 500 can collect all error code data and elevator operation state data generated during the period of time before and after the occurrence of the failure, thereby providing more accurate failure diagnosis results.

Furthermore, the failure diagnosis server 500 can diagnose a failure cause for each time-series group by separately classifying error codes, which are sequentially generated in a very short period of time, into a time-series group in a reference time, thereby providing more rapid and accurate diagnosis results. The reference time may be set by the error code storage unit 502 of the failure diagnosis server 500.

For example, the error code storage unit 502 of the failure diagnosis server 500 may be configured to set a reference time of 5 minutes and may store a plurality of error codes classified into one time-series data group at every 5 minute interval. When a failure occurs in the elevator, error code data are generated continuously before and after the occurrence of the failure and may be classified into one time-series data group at every 5 minute interval. As such, the failure cause is diagnosed and provided for each time-series data group. Accordingly, the error code data generated at very short time intervals of a few seconds can be rapidly classified and analyzed at an occurrence time of the failure, thereby enabling rapid deduction of diagnosis results while improving the processing speed and accuracy of maintenance work.

On the other hand, a failure diagnosis program capable of diagnosing failure causes by analyzing the error code data may be installed in the failure diagnosis server 500. The failure diagnosis program may be adapted to diagnose the failure causes based on data input in advance by a skilled technician.

To this end, the failure diagnosis server 500 may include a failure cause storage unit 504 configured to match and store a plurality of predetermined reference error code data and at least one failure cause corresponding to the reference error code data.

The diagnosis unit 503 may be configured to diagnose failure causes for the error code data based on data stored in the failure cause storage unit 504. For example, the diagnosis unit 503 may be configured to diagnose the failure causes for the error code data in a machine learning manner by training the mutually matched error code data and at least one failure cause as training data.

In addition, when maintenance work is completed at a work site, the maintenance worker may input a failure treatment result. Here, the input failure treatment result may be sent to the failure diagnosis server 500 through the central management server 400. The failure diagnosis server 500 may change the data stored in the failure cause storage unit 504 to reflect such information about the failure treatment result of the maintenance worker.

To this end, the failure diagnosis server 500 may include a failure cause update unit 505 configured to reflect the information about the failure treatment result input by the maintenance worker to update the failure cause matching to the reference error code data stored in the failure cause storage unit 504.

By the failure cause update unit 505, the information about the error code and the failure cause stored in the failure cause storage unit 504 are updated and accuracy of the information about the error code and the failure cause can be improved as the amount of data of the failure treatment results increases. Thus, the elevator maintenance management system according to the embodiment of the invention can improve accuracy and reliability of the failure diagnosis results of the failure diagnosis server 500 over time.

On the other hand, when an error occurs in communication between the elevator control panel 100, the central management server 400, and the failure diagnosis server 500 for a certain period of time, the error code data stored in the elevator control panel 100 may not be sent to the failure diagnosis server 500 for a period of time for which the error continues. In this case, since all of the error code data are not sent to the failure diagnosis server 500, accuracy of the failure diagnosis results of the failure diagnosis server 500 diagnosing the failure causes based on the error code data can be deteriorated. To prepare for this case, a manual collection button may be formed on the first output screen 610 of the maintenance terminal 600. When the maintenance worker touches the manual collection button, the error code data and the like may be collected from the elevator control panel 100 to the failure diagnosis server 500 once again for a certain period of time.

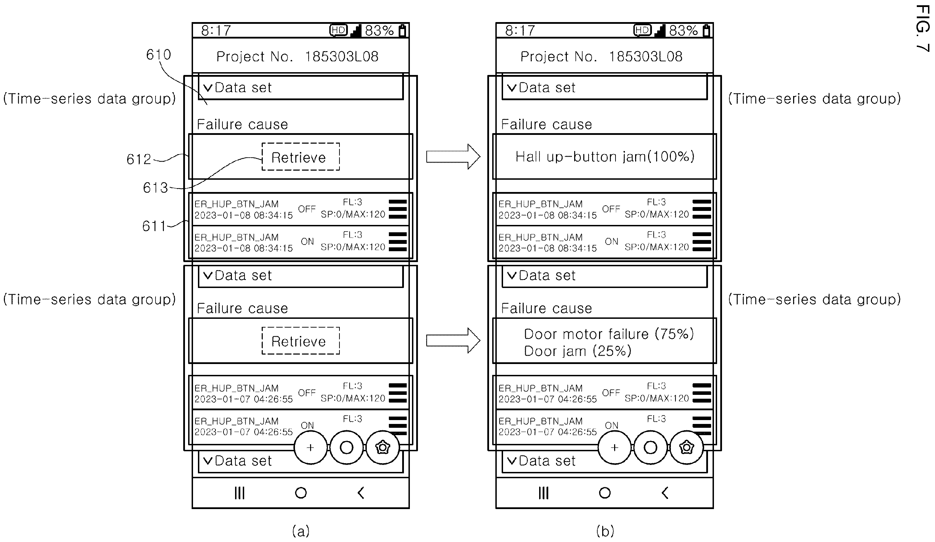

FIG. 7 is an exemplary view illustrating a method of displaying failure diagnosis results in the maintenance terminal according to the embodiment of the present invention.

In the elevator maintenance management system according to the embodiment, when a data request signal is sent to the failure diagnosis server 500 in response to an access input signal from the maintenance terminal 600 as described above, an error code and a failure diagnosis result for each time-series data group may be sent from the failure diagnosis server 500 to the maintenance terminal 600 and may be displayed thereon.

However, when the access input signal is sent from the maintenance terminal 600, a data request signal for the error code may be sent to the failure diagnosis server 500 and a plurality of error code data for each time-series data group may be sent from the failure diagnosis server 500 to the maintenance terminal 600 and displayed thereon, as shown in FIG. 7. When a data request signal requesting a failure diagnosis result is sent through the maintenance terminal 600, the diagnosis unit 503 of the failure diagnosis server 500 may diagnose a failure cause for the error code for each time-series data group. The failure diagnosis server 500 may be configured to send the corresponding failure diagnosis results to the maintenance terminal 600 to be displayed thereon.

That is, the failure diagnosis server 500 may be configured to diagnose the failure causes through the failure diagnosis program and provide the failure diagnosis results to the maintenance terminal when the maintenance worker requests such diagnosis results, instead of immediately providing the failure diagnosis results for the error codes in one time-series data group upon accessing the failure diagnosis server 500.

More specifically, when an access input signal is generated by a maintenance worker touching the link address CL sent as a text message to the maintenance terminal 600 or touching the connection button CB of the maintenance management program, the controller 604 of the maintenance terminal 600 may send a data request signal for error code data to the failure diagnosis server 500. When the failure diagnosis server 500 receives the data request signal, error codes for each time-series data group stored in the error code storage unit 502 are sent to the maintenance terminal 600 and the controller 604 of the maintenance terminal 600 may control the display unit 602 to display the error codes for each time-series data group.

Here, as shown in (a) of FIG. 7, the controller 604 of the maintenance terminal 600 may be configured to control the display unit 602 to form a diagnosis result request input button 613 in the diagnosis result display region 612 so as to allow input of data request signals for failure diagnosis results, with the error code data displayed in a classified state for each time-series data group in the error code display region 611. As described above, since the diagnosis result display region 612 is formed one by one in the error code display region 611 separated for each time-series data group and the diagnosis result request input button 613 is formed in the diagnosis result display region 612, one diagnosis result request input button 613 can be formed for each time-series data group.

In the displayed state, when the maintenance worker touches the diagnosis result request input button 613 of any one of the time-series data groups, an input signal requesting a failure diagnosis result may be generated. When such an input signal is generated, the controller 604 of the maintenance terminal 600 may send a data request signal to the failure diagnosis server 500 to request a failure diagnosis result for the error code data of the corresponding time-series data group corresponding to the diagnosis result request input button 613. In response to such a data request signal, the failure diagnosis server 500 diagnoses a failure cause for the error code of the corresponding time-series data group through the diagnosis unit 503 to derive a diagnosis result. The derived failure diagnosis result may be sent from the failure diagnosis server 500 to the maintenance terminal 600. The controller 604 of the maintenance terminal 600 may be configured to control the display unit 602 to display the received failure diagnosis result of the time-series data group in the diagnosis result display region 612 of the corresponding time-series data group on the first output screen 610. At the same time, the controller 604 may control the display unit to remove the diagnosis result request input button 613 displayed in the diagnosis result display region 612. That is, when the failure diagnosis result is sent to the maintenance terminal 600, the diagnosis result display region 612 may display the failure diagnosis result as soon as the diagnosis result request input button 613 is removed, as shown in (b) of FIG. 7.

The diagnosis result request input button 613 formed in the diagnosis result display region 612 may be generated in the form of a "retrieve" text to be touched by a maintenance worker, as shown in FIG. 7.

With this structure, the failure diagnosis server 500 can diagnose failure causes for a particular time-series data group only when a failure diagnosis result request signal is sent from the maintenance terminal 600. Accordingly, there is no need to repeatedly diagnose failure causes for all past error codes and there is no need to separately store the failure diagnosis results for all past error codes, thereby preventing overloading of the failure diagnosis server 500 while minimizing the capacity thereof.

On the other hand, the diagnosis unit 503 of the failure diagnosis server 500 may derive at least one failure cause and occurrence probability information for each failure cause together as a diagnosis result in the course of diagnosing the failure causes for error code data of one time-series data group. The derived failure causes and occurrence probability information may be displayed together in the diagnosis result display region 612 of the maintenance terminal 600.

For example, as shown in (b) of FIG. 7, a failure diagnosis result for the first time-series data group may be displayed as "Hall up-button jam (100%)". This may mean that a failure cause is a hall up-button jam and the corresponding failure probability is 100%. The failure diagnosis for the second time-series data group may be displayed as "Door Motor Failure (75%), Door Stuck (25%)". This may mean that there is 75% probability that the failure cause is door motor failure and there is 25% probability that the failure cause is a door jam.

By displaying the probability information about the failure cause together with other data, the maintenance worker can take the probability information into account upon determining an operation sequence during the failure treatment process, enabling faster and more accurate maintenance work.

On the other hand, when the failure cause and/or the occurrence probability information displayed in the result display region 612 are/is selected, a maintenance guide corresponding to the failure cause may be displayed. The maintenance guide may include components and/or methods for repairing an indicated failure.

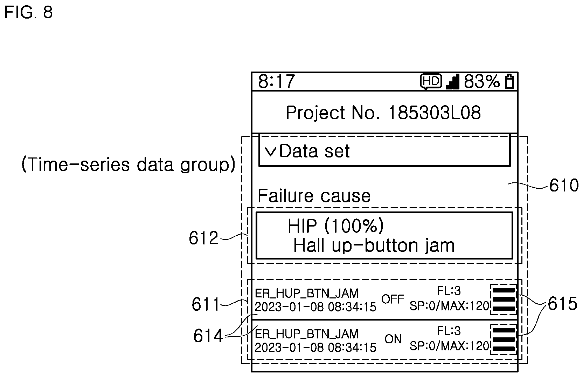

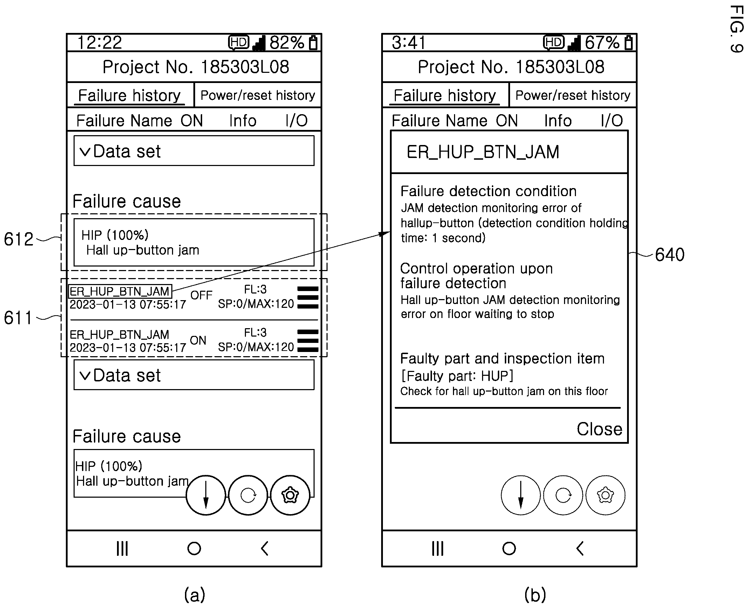

FIG. 8 is an enlarged view of the first output screen displaying error code data and failure diagnosis results for one time-series data group in the maintenance terminal according to the embodiment of the present invention and FIG. 9 is an exemplary view of an error code data display screen of the maintenance terminal for individual error code data in the elevator maintenance management system according to the embodiment of the present invention.

The first output screen 610 of the maintenance terminal 600 according to the embodiment of the present invention may include the error code display region 611 and the diagnosis result display region 612 for each time-series data group, as described above. Referring to FIG. 8, the error code display region 611 may be formed with individual regions 614 configured to individually display each error code datum. Each of the individual regions 614 may display an error code name (EN), an error code occurrence time (ET), operation state data (ED) of the elevator and activation data (EA) of an error code at an occurrence time of the corresponding error codes, as described above.

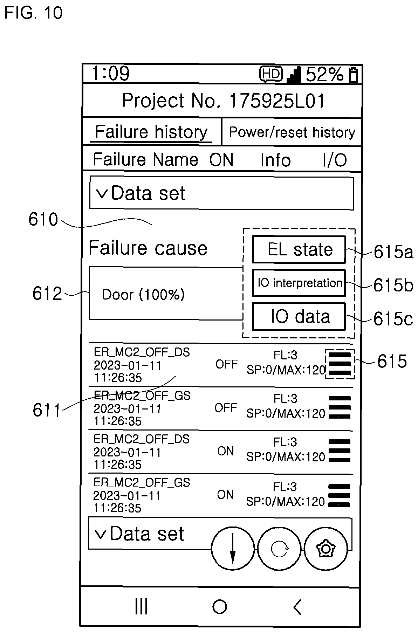

In addition, the error code display region 611 may be formed with menu buttons 615 for the corresponding error code formed in each individual region 614, as shown in FIG. 8. The menu buttons 615 may include three screen switching menus 615a, 615b, 615c, which may be selected by a maintenance worker to switch the screen of the display unit 602 of the maintenance terminal 600 from the first output screen 610 to the second output screen 650, the third output screen 660, or the fourth output screen 670. This configuration will be described in more detail below with reference to FIG. 10 to FIG. 13.

The error code name EN displayed in each of the individual regions 614 of the error code display region 611 may be selectable through touch operation of a maintenance worker. As shown in (a) of FIG. 9, when a selection input signal is generated on the first output screen 610 in such a way that the error code name EN in any one individual region 614 is selected through touch operation, the controller 604 of the maintenance terminal 600 may send a data request signal to the failure diagnosis server 500 through the terminal communication unit 601 to request detailed state data about the corresponding error code. When the failure diagnosis server 500 receives the data request signal, the diagnosis unit 503 may produce detailed state data about the corresponding error code based on the error code data and the elevator operation state data stored in the error code storage unit 502. The produced data may be sent to the maintenance terminal 600. When the maintenance terminal 600 receives the corresponding data through the terminal communication unit 601, the controller 604 may control a separate error code data display screen 640 to display the detailed state data about the corresponding error code, as shown in (b) of FIG. 9.

To this end, the display unit 602 of the maintenance terminal 600 may further include the error code data display screen 640 configured to display detailed state data for each of the error code data displayed on the first output screen 610. The error code data display screen 640 may be controlled to be displayed so as to overlap the first output screen 610, as shown in (b) of FIG. 9.

Here, the detailed state data for each error code datum displayed on the error code data display screen 640 may include data for failure detection conditions, control operation upon failure detection, and faulty parts and inspection items.

"Failure detection conditions" may include a faulty component, failure duration, and a cause of an error. For example, the failure detection conditions may be displayed as "JAM detection monitoring error of hall up-button (detection condition holding time: 1 second)". "Control operation upon failure detection" may include a control operation state for the elevator upon occurrence of corresponding error code data. For example, the control operation upon failure detection may be displayed as "Hall up-button JAM detection monitoring error on floor waiting to stop". "Faulty part and inspection item" include a faulty part and a required inspection item. For example, the faulty part and inspection item may be displayed as "Faulty part: HUP (Hall Up-button), check for hall up-button jam on this floor."

In this way, by touching the error code name displayed in each of the individual regions 614, the detailed state data for each error code datum can be accurately determined. This operation enables the maintenance worker to make accurate determination as to a failure state, thereby improving efficiency and accuracy of maintenance work.

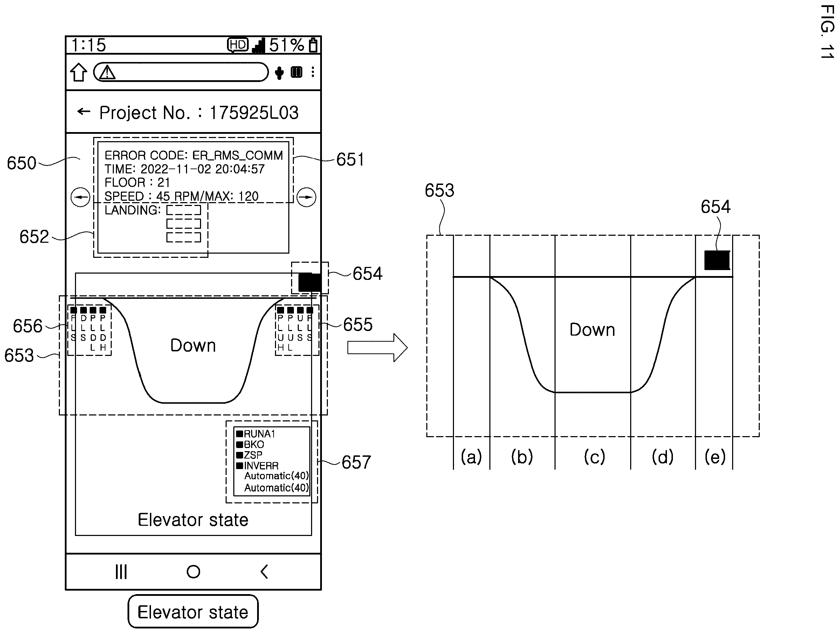

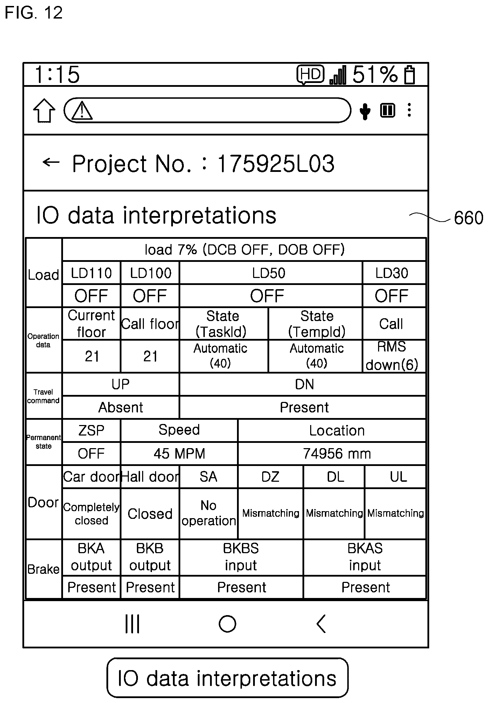

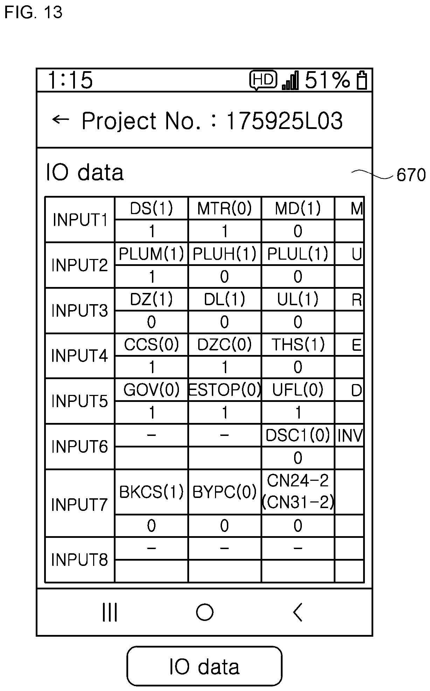

FIG. 10 is an exemplary view of an activated state of the menu buttons for error code data on the first output screen of the maintenance terminal according to the embodiment of the present invention, FIG. 11 is an exemplary view of the second output screen of the maintenance terminal according to the embodiment of the present invention, FIG. 12 is an exemplary view of the third output screen of the maintenance terminal according to the embodiment of the present invention, and FIG. 13 is an exemplary view of the fourth output screen of the maintenance terminal according to the embodiment of the present invention.

The error code display region 611 may be formed with the menu buttons 615 for the corresponding error code in each of the individual regions 614, as shown in FIG. 8 and FIG. 10. The menu buttons 615 may include three screen switching menus 615a, 615b, 615c, which may be selected by the maintenance worker to switch the screen of the display unit 602 of the maintenance terminal 600 from the first output screen 610 to the second output screen 650, the third output screen 660, or the fourth output screen 670.

Among the three switching menus 615a, 615b, 615c, a second output screen switching menu 615a may be formed, for example, in the form of displaying characters "EL state". A third output screen switching menu 615b may be formed, for example, in the form of displaying characters "IO interpretation". A fourth output screen switching menu 615c can be formed, for example, in the form of displaying characters "10 Data".

The first output screen 610 may display error code data and failure diagnosis results for each time-series data group, as described above. The second output screen 650 may display visualized data in a graphical form for each error code of the first output screen 610 by graphing the operation state data of the elevator at an occurrence time of the corresponding error code. The third output screen 660 may display tabulated data for each error code of the first output screen 610 by analyzing IO data (input-output data) for an operation state of the elevator at an occurrence time of the corresponding error code and displaying tabulated IO data interpretations (input-output data interpretations) for the operation state of the elevator. The fourth output screen 670 may display tabulated data for each error code of the first output screen 610 by tabulating the IO data about the operation state of the elevator at the occurrence time of the corresponding error code. That is, unlike the third output screen 660, the fourth output screen 670 may display the IO data itself rather than data interpretations of the IO data of the elevator at the occurrence times of the error codes.

To this end, as shown in FIG. 3, the failure diagnosis server 500 includes the visualization processing unit 506 configured to produce visualized data in a graphical form by graphing the operation state data of the elevator corresponding to each of the error codes at an occurrence time of the corresponding error code, the IO analysis unit 507 configured to analyze IO data about the operation state of the elevator corresponding to each error code at the occurrence time of the corresponding error code to produce tabulated IO data interpretations about the operation state of the elevator, and the IO data processing unit 508 configured to extract the IO data about the operation state of the elevator corresponding to each error code at the occurrence time of the corresponding error code.

When an input signal is generated by selecting one of the three screen switching menus 615a, 615b, 615c through the menu button 615 formed on the first output screen 610 of the maintenance terminal 600, the controller 604 of the maintenance terminal 600 may send a data request signal corresponding to the input signal of the corresponding screen switching menu to the failure diagnosis server 500. That is, a data request signal for any one of the visualized data, the IO data interpretations, and the IO data may be sent to the failure diagnosis server 500. In response to the data request signal, the failure diagnosis server 500 may produce corresponding data through one of the visualization processing unit 506, the IO analysis unit 507, and the IO data processing unit 508. The failure diagnosis server 500 may send the produced data to the maintenance terminal 600 through the second communication unit 501b. When the maintenance terminal 600 receives the corresponding data through the terminal communication unit 601, the controller 604 may control the maintenance terminal 600 to display the corresponding data by switching the screen of the maintenance terminal 600 to an output screen corresponding to the corresponding data.

Referring to FIG. 11, the second output screen 650 may include a speed display region 653 configured to graphically display a speed change state of the elevator, and a door display region 654 configured to display an operation state of an elevator door detected at an occurrence time of an error code. The speed display region 653 may be formed in a central region of the second output screen 650 and may indicate whether an operation mode of the elevator is an up or down mode (indicated in the form of UP/DOWN). Further, the speed display region 653 may be formed by separating the corresponding region of the elevator into at least five sections: a pre-departure stop section A, an acceleration section B, a steady speed section C, a deceleration section D, and a post-arrival stop section E. The door display region 654 may be formed to indicate, via shapes (for example, rectangles) and colors (for example, green/red/yellow, and the like), whether the door is open, closed, or between an open state and a closed state. The door display region 654 may be displayed at a location corresponding to an occurrence time of an error code in the speed display region 653. That is, the door display region 654 may be displayed to be located at a particular section of the speed display region 653 corresponding to the occurrence time of the error code in the speed display region 653 separated into five sections.

As such, as the door display region 654 is integrated with the speed display region 653 to be displayed therewith by taking into account the location of the elevator at the occurrence time of the error code, it can be determined whether the error code occurred at a certain point in time during travel of the elevator. Further, it can be determined whether the door is normal or abnormal at the occurrence time of the error code. For example, referring to FIG. 11, an occurrence time of a selected error code is in a time interval e for which the elevator is in a stopped state after arrival, indicating that the door is in a normally closed state.

Thus, through the visualized data of the speed display region 653 and the door display region 654, it is possible to quickly and immediately determine the speed change state of the elevator, whether the door is normally operated, and the like at the occurrence time of the error code. Accordingly, it is possible to further improve promptness and efficiency of maintenance work.

Further, as shown in FIG. 11, the second output screen 650 may be formed with a basic data display region 651 configured to display basic data of the error code and a landing level display region 652 configured to display a landing level state of the elevator through shapes and colors for three landing sensors of the elevator at an occurrence time of the corresponding error code. Further, the speed display region 653 may be integrally formed with an upper limit display region 655 configured to display whether an upper limit switch is operated at the occurrence time of the corresponding error code, and a lower limit display region 656 configured to display whether a lower limit switch is operated at the occurrence time of the corresponding error code. In addition, the speed display region 653 may be formed in a lower section thereof with a major component display region 657 configured to display a normal/abnormal state of major sensors and major components of the elevator at the occurrence time of the corresponding error code.

Although not shown in the drawings, various other visualized data may be displayed and the visualized data shown in FIG. 11 may also be changed to various other forms.

Referring to FIG. 12, the third output screen 660 may display tabulated IO data interpretations of the elevator corresponding to occurrence times of error code data. The IO data interpretations may include a table of interpretations of IO data, such as a summary of main IO data and elevator state data that can be obtained from the IO data. The IO data interpretations may include various data, for example, a load state, operation data, a travel command state, a permanent state, a door operation state, a brake operation state, and the like.

Further, the IO data interpretations may be configured to highlight an item requiring inspection by highlighting or displaying IO data or data interpretations determined to be abnormal in a different color or the like. Alternatively, in the IO data interpretations, IO data or data interpretations collected from error codes at a previous time point other than the IO data or data interpretations determined to be abnormal, or items with different results from the IO data or data interpretations determined to be abnormal may be highlighted or displayed in a different color.

Referring to FIG. 13, the fourth output screen 670 may display tabulated IO data (signal values, etc.) of the elevator corresponding to an occurrence time of the error code data. Although the third output screen 660 displays data interpretations produced by analyzing the IO data, the fourth output screen 670 may display the IO data itself as signal values and the like rather than the data interpretations of the IO data. Therefore, a maintenance worker can refer to the IO data interpretations through the third output screen 660 and can check actual IO data itself through the fourth output screen 670 based on the data interpretations. Accordingly, the maintenance worker can perform more accurate failure diagnosis and treatment. In particular, for a skilled maintenance worker, it is possible to more accurately diagnose and treat failure based on maintenance worker's experiences by checking the IO data together with the IO data interpretations through the third output screen 660 and the fourth output screen 670. For an unskilled maintenance worker who has a relatively low ability to interpret the IO data, it can be easy to identify a failure situation based on the IO data interpretations through the third output screen 660 rather than the fourth output screen 670.

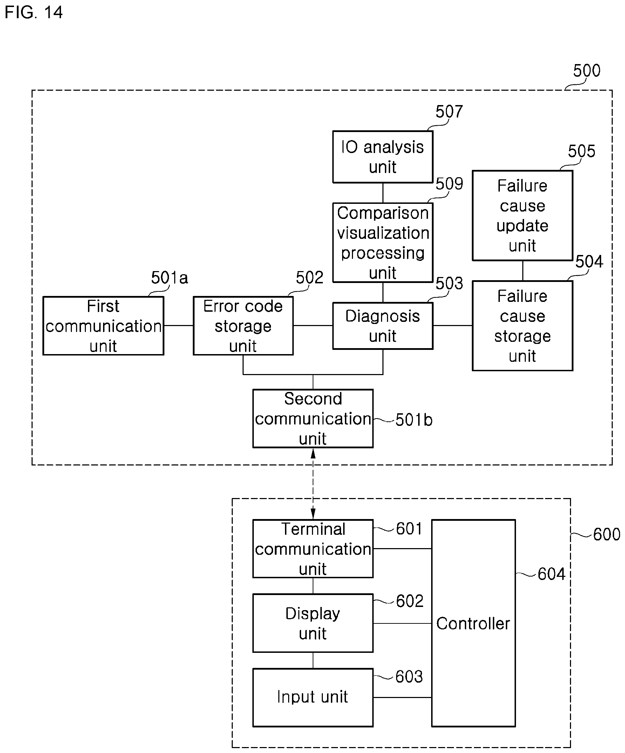

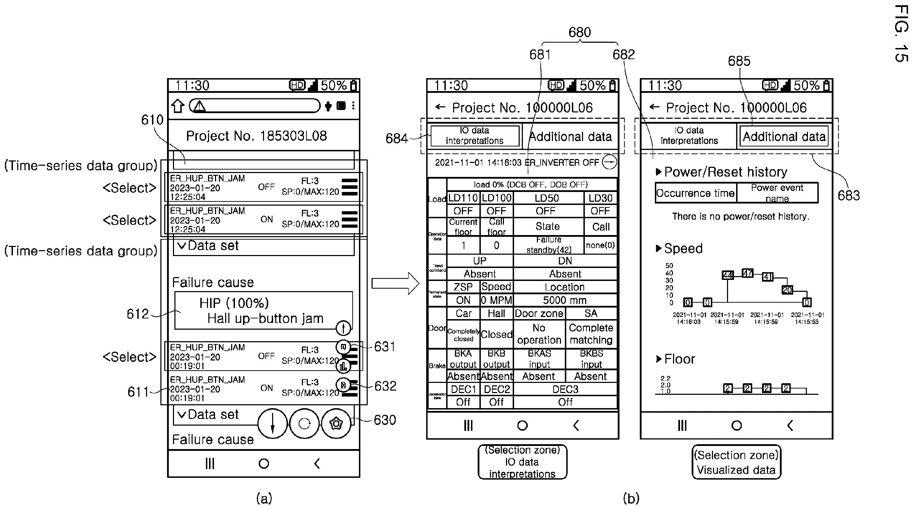

FIG. 14 is a block diagram of a failure diagnosis server and a maintenance terminal of an elevator maintenance management system according to one embodiment of the present invention and FIG. 15 is an exemplary view of a selection comparison output screen configured to compare user-selected error code data in the elevator maintenance management system according to the embodiment of the present invention.

An elevator maintenance management system according to one embodiment of the present invention is similar to the maintenance management system described above excluding a comparison visualization processing unit 506 as the visualization processing unit 509. Since description of the same configuration is the same as the above description, detailed description thereof will be omitted to avoid redundancy.

As described above, the elevator maintenance management system according to this embodiment may be configured to classify multiple error code data into one time-series data group for each reference time interval and to provide failure diagnosis results based on the error code data for each time-series data group. Furthermore, as shown in FIG. 15, the elevator maintenance management system according to this embodiment may be configured to allow a maintenance worker to select some error code data among the multiple error code data and to provide visualized comparative data for operation state data of the elevator collected at an occurrence time of each of the selected error code data.

To this end, the display unit 602 of the maintenance terminal 600 may include the first output screen 610 described above and a selection comparison output screen 680 configured to output the operation state data of the elevator collected at an occurrence time of each of the error codes selected by the maintenance worker on the first output screen 610 through comparison with the selected error codes.

Referring to FIG. 15, the first output screen 610 may be formed with a selection mode conversion button 631 configured to allow conversion to a selection screen mode in which the error code data displayed in the error code display region 611 can be selected by the maintenance worker. When the maintenance worker touches the selection mode conversion button 631, the first output screen may be converted to the selection screen mode in which some error code data among the error code data displayed in the error code display region 611 can be selected by the maintenance worker. In FIG. 15, (a) illustrates the first output screen 610 converted to the selection screen mode. In the selection screen mode, the maintenance worker can select multiple error code data through touch operation. In (a) of FIG. 15, three error code data are selected by way of example.

In addition, the first output screen 610 may be formed with a comparison screen switching button 633 configured to allow screen switching to the selection comparison output screen 680.

The selection mode conversion button 631 and the comparison screen switching button 633 may be automatically generated as soon as the first output screen 610 is displayed on the display unit 602. However, alternatively, the selection mode conversion button 631 and the comparison screen switching button 633 may be generated on the first output screen 610 in response to touch operation of a setting button 630, which is automatically generated on the first output screen 610, as shown in (a) of FIG. 15.

As shown in FIG. 15, the selection comparison output screen 680 may include an interpretation comparison output screen 681 configured to display each of tabulated IO data interpretations (input/output data interpretations) for the operation state of the elevator at an occurrence time of each of the selected error codes and a visualized data comparison output screen 682 configured to display predetermined data about the operation state of the elevator in a graphical form of visualized data comparable with each other.

The interpretation comparison output screen 681 and the visualized data comparison output screen 682 may be switched to each other through manipulation of the maintenance worker. For example, the interpretation comparison output screen 681 and the visualized data comparison output screen 682 may be switched through a switching tab 683 formed at an upper end of the selection comparison output screen 680. The switching tab 683 may include an interpretation switching tab 684 and a visualized data switching tab 685. When the interpretation switching tab 684 is touched, the interpretation comparison output screen 681 may be displayed. When the visualized data switching tab 685 is touched, the visualized data comparison output screen 682 may be displayed. When the comparison screen switching button 633 is touched on the first output screen 610, the selection comparison output screen 680 may display the interpretation comparison output screen 681 as a default screen. With the interpretation comparison output screen 681 displayed, the visualized data comparison output screen 682 may be displayed when the visualized data switching tab 685 is touched. The interpretation switching tab 684 may be formed, for example, with characters "IO data interpretations" displayed thereon. The visualized data switching tab 685 may be formed, for example, with characters "Additional data" displayed thereon.

Referring to FIG. 2 and FIG. 14, the failure diagnosis server 500 may further include an IO analysis unit 507 configured to analyze IO data for an operation state of the elevator corresponding to each error code selected on the maintenance terminal 600 at an occurrence time of the corresponding error code to produce tabulated IO data interpretations about the operation state of the elevator, and a comparison visualization processing unit 509 configured to produce predetermined basic data about the operation state of the elevator corresponding to each error code selected on the maintenance terminal 600 at an occurrence time of the corresponding error code in a graphical form of visualized data comparable with each other.

According to this structure, in a process of displaying the selection comparison output screen 680, first, the maintenance worker may touch the selection mode conversion button 631 to convert the first output screen 610 to the selection screen mode state and then may select some error code data. When selection of the error code data is completed, the maintenance worker may touch the comparison screen switching button 633. When an input signal is generated by touching the comparison screen switching button 633, the controller 604 may send a data request signal to the failure diagnosis server 500 to request comparison data of an operation state of the elevator for the selected error code data. When the data request signal is sent to the failure diagnosis server 500, the IO analysis unit 507 may produce tabulated IO data interpretations about the operation state of the elevator at an occurrence time of each of the selected error codes. The comparison visualization processing unit 509 may produce the basic data about the operation state of the elevator at an occurrence time of each of the selected error codes in a graphical form of visualized data comparable with each other. The data produced by the IO analysis unit 507 and the comparison visualization processing unit 509 may be sent to the maintenance terminal 600 through the second communication unit 501b. When the corresponding data is sent to the maintenance terminal 600 through the terminal communication unit 601, the controller 604 may control the selection comparison output screen 680 to output the corresponding data. Here, the interpretation comparison output screen 681 may be displayed as a default screen among the selection comparison output screens 680. Then, the visualized data comparison output screen 682 may be displayed when the visualized data switching tab 685 is touched.

The interpretation comparison output screen 681 may display tabulated IO data interpretations for each elevator at an occurrence time of each of the selected error codes. The IO data interpretations may include a table of interpretations of IO data, such as a summary of main IO data and elevator state data that can be obtained from the IO data. The IO data interpretations may include various data, for example, a load state, operation data, a travel command state, a permanent state, a door operation state, a brake operation state, and the like. Further, the IO data interpretations may be configured to highlight an item requiring inspection by highlighting or displaying IO data or data interpretations determined to be abnormal in a different color or the like. Alternatively, in the IO data interpretations, IO data or data interpretations collected from error codes at a previous time point other than the IO data or data interpretations determined to be abnormal, or items with different results from the IO data or data interpretations determined to be abnormal may be highlighted or displayed in a different color.

The IO data interpretations may be separately displayed for each of the selected error codes and may be continuously displayed on the screen in a vertical direction. That is, the IO data interpretations may be separately displayed for each of the selected error codes such that an IO data interpretation corresponding to any one of the error codes is separately displayed and an additional IO data interpretation corresponding to another error code is separately displayed under the IO data interpretation. Alternatively, the IO data interpretations corresponding to each of the error codes may be displayed in a tabulated form such that the same items can be compared with each other through a mutual comparison table. For example, for a door operation state item, door operation states corresponding to respective error codes may be displayed in a single item field so as to be comparable with each other.

The visualized data comparison output screen 682 may display predetermined basic data for an operation state of each elevator at an occurrence time of each of the selected error codes in a graphical form of visualized data comparable with each other. The predetermined basic data may include power/reset history, elevator speed, floor data, and the like.

As for the basic data about the operation state of the elevator, basic data corresponding to each of the selected error codes at an occurrence time of the corresponding error code may be displayed in one graph region so as to be comparable with each other. For example, for the elevator speed as one of the basic data, a speed detected at each occurrence time of a plurality of selected error codes may be displayed in the form of a line graph in one graph region. In (b) of FIG. 15, an elevator speed of 0-0-44-47-41-20-0 at each of the occurrence times of the plurality of selected error codes is shown by way of example in one graph region.

This structure allows the operation state data of the elevator to be separately compared and analyzed with multiple error code data arbitrarily selected by the maintenance worker, thereby improving failure diagnosis accuracy and treatment speed.

Although some exemplary embodiments have been described herein, it should be understood that these embodiments are given by way of illustration only and that various modifications, variations, and alterations can be made by those skilled in the art without departing from the spirit and scope of the invention. Accordingly, it should be understood that the embodiments disclosed herein are intended to illustrate and not to limit the technical ideas of the invention, and the scope of the technical ideas of the invention is not limited by the embodiments. The scope of protection of the invention shall be construed in accordance with the following claims and all technical ideas within the scope of equivalents thereto shall be construed to be included within the scope of the invention.

### <List of Reference Numerals>

100: Elevator control panel
200: Communication unit
310: Modem
320: Surveillance server
400: Central management server
500: Failure diagnosis server
501 a: First communication unit
501b: Second communication unit
502: Error code storage unit
503: Diagnosis unit
504: Failure cause storage unit
505: Failure cause update unit
506: Visualization processing unit
507: IO analysis unit
508: IO data processing unit
509: Comparison visualization processing unit
600: Maintenance terminal
601: Terminal communication unit
602: Display unit
603: Input unit
604: Controller
610: First output screen
611: Error code display region
612: Diagnosis result display region
613: Diagnosis result request input button
614: Individual region
615: Menu button
615a: Second output screen switching button
615b: Third output screen switching button
615c: Fourth output screen switching button
630: Setting button
631: Selection mode conversion button
633: Comparison screen switching button
640: Error code data display screen
650: Second output screen
652: Landing level display region
653: Speed display region
654: Door display region
660: Third output screen
670: Fourth output screen
680: Selection comparison output screen
681: Interpretation comparison output screen
682: Visualized data comparison output screen
684: Interpretation switching tab
685: Visualized data switching tab

## Claims

1. A maintenance management system of a passenger transfer device, the maintenance management system comprising:
a failure diagnosis server configured to collect and store error code data and operation state data of the passenger transfer device from a control panel of the passenger transfer device, and configured to diagnose a failure cause based on the collected error code data; and
a maintenance terminal configured to access the failure diagnosis server to receive and display the error code data, a failure diagnosis result for the failure cause, and the operation state data of the passenger transfer device sent from the failure diagnosis server,
wherein the maintenance terminal comprises: a first output screen configured to display the error code data and the failure diagnosis result; and a second output screen configured to display the operation state data of the passenger transfer device at an occurrence time of the error code in a graphical form of visualized data.

2. The maintenance management system according to claim 1, wherein the failure diagnosis server comprises:
a first communication unit configured to receive the error code data and the operation state data of the passenger transfer device recorded in the control panel of the passenger transfer device in real time;
an error code storage unit configured to arrange the error code data received through the first communication unit in a time sequence and configured to classify and store the error code data into one time-series data group at every preset reference time interval;
a diagnosis unit configured to analyze the error code data for each time-series data group stored in the error code storage unit and configured to diagnose a failure cause for the time-series data group;
a visualization processing unit configured to produce visualized data in a graphical form by graphing the operation state data of the passenger transfer device corresponding to the error code at an occurrence time of the error code; and
a second communication unit configured to receive a data request signal from the maintenance terminal and to send the error code data stored in the error code storage unit, the failure diagnosis result diagnosed by the diagnosis unit, and the visualized data produced by the visualization processing unit to the maintenance terminal,
the failure diagnosis server being configured to send the error code data, the failure diagnosis result and the visualized data to the maintenance terminal upon receiving the data request signal from the maintenance terminal.

3. The maintenance management system according to claim 2, wherein the maintenance terminal above comprises:
an input unit for input operation of a maintenance worker;
a display unit including a first output screen and a second output screen to display the error code data, the failure diagnosis result, and the visualized data sent from the failure diagnosis server;
a terminal communication unit configured to receive the error code data, the failure diagnosis result, and the visualized data from the failure diagnosis server through communication with the second communication unit; and
a controller configured to send a data request signal to the failure diagnosis server through the terminal communication unit upon generation of an input signal by the maintenance worker and configured to control the display unit to display at least one of the error code data, the failure diagnosis result, and the visualized data received from the failure diagnosis server corresponding to transmission of the data request signal.

4. The maintenance management system according to claim 3, wherein the first output screen comprises: an error code display region in which the error code data is displayed in a classified state for each time-series data group; and a diagnosis result display region in which a failure diagnosis result for the error code data is displayed for each time-series data group.

5. The maintenance management system according to claim 4, wherein the error code display region comprises individual regions configured to display each error code datum separately, each of the individual regions is formed with a menu button including a second output screen switching menu selected for switching of an output screen of the maintenance terminal to the second output screen.

6. The maintenance management system according to claim 3, wherein the second output screen comprises:
a speed display region configured to display a speed change state of the passenger transfer device in a graphical form; and
a door display region configured to display an operation state of a door of the passenger transfer device detected at an occurrence time of the error code,
the door display region being displayed at a location corresponding to an occurrence time of the error code in the speed display region.

7. The maintenance management system according to claim 3,
wherein the failure diagnosis server further comprises an IO analysis unit configured to analyze IO data about an operation state of the passenger transfer device corresponding to each error code at an occurrence time of the corresponding error code and to produce tabulated IO data interpretations about the operation state of the passenger transfer device, and
wherein the display unit of the maintenance terminal further comprises a third output screen configured to display the tabulated IO data interpretations produced by the IO analysis unit.

8. The maintenance management system according to claim 3, wherein the display unit of the maintenance terminal further comprises an error code data display screen configured to display state data for each of the error code data displayed on the first output screen and is controlled by the controller to allow the error code data display screen to be displayed so as to overlap the first output screen upon generation of a selection input signal by which any of the error code data displayed on the first output screen is selected.

9. A method of controlling a maintenance management system of a passenger transfer device, the maintenance management system including a failure diagnosis server and a maintenance terminal, the method comprising:
collecting and storing, by the failure diagnosis server, error code data and operation state data of the passenger transfer device from a control panel of the passenger transfer device;
diagnosing, by the failure diagnosis server, a failure cause based on the collected error code data;
producing, by the failure diagnosis server, visualized data in a graphical form using the operation state data of the passenger transfer device at an occurrence time of the error code; and
receiving and displaying, by the maintenance terminal, the error code data, a failure diagnosis result, and the visualized data from the failure diagnosis server,
wherein the maintenance terminal displays the error code data and the failure diagnosis result on a first output screen, and displays visualized data for an operation state of the passenger transfer device at an occurrence time of the error code on a second output screen.

10. A maintenance management system of a passenger transfer device, comprising:
a failure diagnosis server configured to collect and store error code data and operation state data of the passenger transfer device from a control panel of the passenger transfer device, and configured to diagnose a failure cause based on the collected error code data; and
a maintenance terminal configured to access the failure diagnosis server to receive and display the error code data, a failure diagnosis result for the failure cause, and the operation state data of the passenger transfer device sent from the failure diagnosis server,
wherein the maintenance terminal comprises a first output screen configured to display the error code data and the failure diagnosis result, and a selection comparison output screen configured to output operation state data of the passenger transfer device collected at an occurrence time of each of error codes selected by a maintenance worker on the first output screen through comparison with the selected error codes.

11. The maintenance management system according to claim 10, wherein the selection comparison output screen comprises:
an interpretation comparison output screen configured to display each of tabulated IO data interpretations for an operation state of the passenger transfer device at an occurrence time of each of the selected error codes; and
a visualized data comparison output screen configured to display predetermined data about the operation state of the passenger transfer device at the occurrence time of each of the selected error codes in a graphical form of visualized data comparable with each other, and
wherein the interpretation comparison output screen and the visualized data comparison output screen are switched to each other by manipulation of the maintenance worker.

12. The maintenance management system according to claim 11, wherein the first output screen is formed with a selection mode conversion button configured to allow conversion to a selection screen mode in which the error code data displayed on the first output screen can be selected by the maintenance worker, and a comparison screen switching button configured to allow screen switching to the selection comparison output screen.

13. The maintenance management system according to claim 11, wherein the failure diagnosis server comprises:
a first communication unit configured to receive the error code data and the operation state data of the passenger transfer device recorded in the control panel of the passenger transfer device in real time;
an error code storage unit configured to arrange the error code data received through the first communication unit in a time sequence and configured to classify and store the error code data into one time-series data group at every preset reference time interval;
a diagnosis unit configured to analyze the corresponding error code data for each time-series data group stored in the error code storage unit and configured to diagnose a failure cause for the time-series data group;
an IO analysis unit configured to analyze IO data for an operation state of the passenger transfer device corresponding to each error code selected on the maintenance terminal at an occurrence time of the corresponding error code to produce tabulated IO data interpretations about the operation state of the passenger transfer device;
a comparison visualization processing unit configured to produce predetermined basic data about the operation state of the passenger transfer device corresponding to each error code selected on the maintenance terminal at an occurrence time of the corresponding error code in a graphical form of visualized data comparable with each other; and
a second communication unit configured to receive a data request signal from the maintenance terminal and to send the error code data, a failure diagnosis result, IO data interpretations, and the visualized data to the maintenance terminal, and may be configured to send the error code data, the failure diagnosis result, the IO data interpretations, and the visualized data to the maintenance terminal upon receiving the data request signal from the maintenance terminal.

14. The maintenance management system according to claim 13, wherein the maintenance terminal comprises:
an input unit for input operation of a maintenance worker;
a display unit comprising a first output screen and a selection comparison output screen to display the error code data, the failure diagnosis result, the IO data interpretations, and the visualized data sent from the failure diagnosis server;
a terminal communication unit configured to receive the error code data, the failure diagnosis result, the IO data interpretations, and the visualized data from the failure diagnosis server through communication with the second communication unit; and
a controller configured to send a data request signal to the failure diagnosis server through the terminal communication unit upon generation of an input signal by the maintenance worker and configured to display at least one of the error code data, the failure diagnosis result, the IO data interpretations, and the visualized data received from the failure diagnosis server on the display unit corresponding to transmission of the data request signal.

15. A method of controlling a maintenance management system of a passenger transfer device, the maintenance management system comprising a failure diagnosis server and a maintenance terminal, the method comprising:
collecting and storing, by the failure diagnosis server, error code data of the passenger transfer device and operation state data of the passenger transfer device from a control panel of the passenger transfer device;
diagnosing, by the failure diagnosis server, a failure cause based on the collected error code data;
producing, by the failure diagnosis server, a comparison result through comparison of some error code data with the operation state data of the passenger transfer device collected at an occurrence time of each error code; and
receiving and displaying, by the maintenance terminal, the error code data, a failure diagnosis result, and comparison result data from the failure diagnosis server,
wherein the maintenance terminal is configured to allow a maintenance worker to select some error code data among the error code data displayed on the maintenance terminal, and
the step of producing a comparison result comprises comparing the operation state data of the passenger transfer device collected at the occurrence time of each error code with some error code data selected on the maintenance terminal to produce the comparison result.
